# NEUE EUROPÄISCHE PATENTSCHRIFT

(11) **EP 3 501 648 B2**
(45) Veröffentlichungstag und Bekanntmachung des Hinweises auf die Entscheidung über den Einspruch: **10.06.2026**
(45) Hinweis auf die Patenterteilung: 04.10.2023
(21) Anmeldenummer: 17208615.9
(22) Anmeldetag: 19.12.2017
(51) Int. Cl.: B01J 37/02, B01J 35/00, B01J 23/63, B01D 53/94, F01N 3/10, F01N 3/035

(54) **KATALYTISCH AKTIVES PARTIKELFILTER**
CATALYTICALLY ACTIVE PARTICLE FILTER
FILTRE À PARTICULES CATALITYQUEMENT ACTIF

(43) Veröffentlichungstag der Anmeldung: 26.06.2019
(73) Patentinhaber: Umicore AG & Co. KG, 63457 Hanau-Wolfgang (DE)
(72) Erfinder: SCHOENHABER, Jan, 64287 Darmstadt (DE); DEIBEL, Naina, 64319 Pfungstadt (DE); ROESCH, Martin, 63110 Rodgau (DE); SPIESS, Stephanie, 64289 Darmstadt (DE); RICHTER, Joerg-Michael, 60389 Frankfurt (DE); KUNERT, Susanne, 64342 Seeheim-Jugenheim (DE)

(56) Entgegenhaltungen:
- EP-A1- 2 042 225
- EP-A1- 2 322 773
- EP-A1- 3 207 990
- WO-A1-2014/178633
- WO-A1-2017/209083
- US-A1- 2014 140 899

## Beschreibung

Die vorliegende Erfindung betrifft ein katalytisch aktives Partikelfilter, das sich insbesondere für die Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren eignet.

Abgase von mit stöchiometrischem Luft/Kraftstoff-Gemisch betriebenen Verbrennungsmotoren, also Benzinmotoren, werden in herkömmlichen Verfahren mit Hilfe von Dreiwege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen.

Neben diesen gasförmigen Schadstoffen enthält das Abgas von Benzinmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Verbrennungsmotoren sehr klein und weisen eine durchschnittliche Partikelgröße kleiner 1 mm auf. Typische Partikelgrößen liegen im Bereich 10 bis 200 nm. Des Weiteren ist die emittierte Partikelmenge sehr gering und bewegt sich im Bereich von 2 bis 4 mg/km.

Mit der europäischen Abgasnorm EU-6c ist eine Umstellung des Grenzwertes für solche Partikel vom Partikelmassengrenzwert auf einen kritischeren Partikelzahlgrenzwert von 6 x 10¹¹/km (im Worldwide harmonized Light vehicles Test Cycle - WLTP) verbunden. Damit entsteht Bedarf nach Abgasreinigungskonzepten für stöchiometrisch betriebene Verbrennungsmotoren, die effektiv arbeitende Einrichtungen zur Entfernung von Partikeln umfassen.

Im Bereich der Reinigung von Abgas von mager betriebenen Motoren, also insbesondere von Dieselmotoren, haben sich Wandflussfilter aus keramischen Materialien, wie z.B. Siliciumcarbid, Aluminiumtitanat und Cordierit bewährt. Diese sind aus einer Vielzahl von parallelen Kanälen aufgebaut, die durch poröse Wände gebildet werden. Die Kanäle sind wechselseitig an einem der beiden Enden des Filters verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt.

Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck wird beispielsweise das Wandflussfilter mit katalytisch aktiven Beschichtungen versehen, die die Zündtemperatur von Ruß herabsetzen.

Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP 1 657 410 A2 beschreibt auch bereits eine Kombination beider Beschichtungsarten, d.h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Verbrennungsmotoren übertragen worden, siehe zum Beispiel die EP 2042226 A2. Gemäß deren Lehre trägt ein Wandflussfilter zwei übereinander angeordnete Schichten, wobei eine in der porösen Wand und die andere auf der porösen Wand angeordnet sein kann.

Ein ähnliches Konzept verfolgt die DE 102011050788 A1. Dort enthalten die porösen Filterwände ein Katalysatormaterial eines Drei-Wege-Katalysators, während zusätzlich ein Katalysatormaterial eines Drei-Wege-Katalysators auf Teilbereiche der Filterwände aufgebracht ist.

Weitere Dokumente, die mit katalytisch aktiven Beschichtungen versehene Filtersubstrate beschreiben, sind EP 2042225 A1, WO 2017/209083 A1, EP 2322773 A1, EP 3205388 A1, EP 3207977 A1, EP 3207978 A1, EP 3207987 A1, EP 3207989 A1, EP 3207990 A1 und EP 3162428 A1.

Es besteht weiter Bedarf nach katalytisch aktiven Partikelfiltern, die die Funktionalitäten eines Partikelfilters und eines Dreiwegekatalysators vereinen und dabei die künftig geltenden Grenzwerte einzuhalten erlauben. Die vorliegende Erfindung betrifft ein Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren gemäß Anspruch 1.

Die Beschichtungen Y und Z sind Dreiwege-katalytisch aktiv, insbesondere bei Betriebstemperaturen von 250 bis 1100 °C.

Die Beschichtungen Y und Z können sich hinsichtlich der enthaltenen Komponenten unterscheiden. So können sie sich beispielsweise hinsichtlich der enthaltenen Sauerstoffspeicherkomponenten unterscheiden. Sie können aber auch identische Bestandteile enthalten. Im letztgenannten Fall, können die Beschichtungen Y und Z die Bestandteile in gleichen oder verschiedenen Mengen enthalten.

Als Edelmetalle werden Palladium und Rhodium eingesetzt. Bezogen auf das erfindungsgemäße Partikelfilter ist der Anteil von Rhodium am gesamten Edelmetallgehalt insbesondere größer oder gleich 10 Gew.-%. Die Edelmetalle werden üblicherweise in Mengen von 0,15 bis 5 g/l, bezogen auf das Volumen des Wandflussfilters eingesetzt.

Als Trägermaterialien für die Edelmetalle kommen alle dem Fachmann für diesen Zweck geläufigen Materialien in Betracht. Solche Materialien sind insbesondere Metalloxide mit einer BET-Oberfläche von 30 bis 250 m²/g, bevorzugt von 100 bis 200 m²/g (bestimmt nach DIN 66132).

Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Zirkoniumoxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird.

Als Sauerstoffspeicherkomponenten kommen insbesondere Cer/Zirkonium/ Seltenerdmetall-Mischoxide in Frage. Der Begriff "Cer/Zirkonium/ Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können.

Im Übrigen umfasst der Begriff Seltenerdmetall bzw. Seltenerdmetalloxid im Sinne vorliegender Erfindung kein Cer bzw. kein Ceroxid.

Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht.

Bevorzugt sind Lanthanoxid, Yttriumoxid und/oder Praseodymoxid. Besonders bevorzugt sind Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid.

In Ausführungsformen der vorliegenden Erfindung sind die Sauerstoffspeicherkomponenten frei von Neodymoxid.

Erfindungsgemäß kann das Masseverhältnis von Ceroxid zu Zirkoniumoxid in den Cer/Zirkonium/Seltenerdmetall-Mischoxiden in weiten Grenzen variieren. Es beträgt beispielsweise 0,1 bis 1,5, bevorzugt 0,2 bis 1 oder 0,3 bis 0,5.

In Ausführungsformen der vorliegenden Erfindung umfasst Beschichtung Y eine Sauerstoffspeicherkomponente mit einem Gehalt an Ceroxid von 20 bis 40 Gew.-%, bezogen auf das Gewicht der Sauerstoffspeicherkomponente.

In Ausführungsformen der vorliegenden Erfindung umfasst Beschichtung Z eine Sauerstoffspeicherkomponente mit einem Gehalt an Ceroxid von 30 bis 60 Gew.-%, bezogen auf das Gewicht der Sauerstoffspeicherkomponente Lanthanoxid enthaltende Sauerstoffspeicherkomponenten weisen insbesondere ein Masseverhältnis von Lanthanoxid zu Ceroxid von 0,05 bis 0,5 auf.

Üblicherweise enthalten die Beschichtungen Y und Z Sauerstoffspeicherkomponenten in Mengen von 15 bis 120 g/l, bezogen auf das Volumen des Wandflussfilters.

Das Masseverhältnis von Trägermaterialien und Sauerstoffspeicherkomponenten in den Beschichtungen Y und Z beträgt üblicherweise 0,3 bis 1,5, beispielsweise 0,4 bis 1,3.

In Ausführungsformen der vorliegenden Erfindung enthalten eine oder beide der Beschichtungen Y und Z eine Erdalkaliverbindung wie z.B. Strontiumoxid, Bariumoxid oder Bariumsulfat. Die Menge an Bariumsulfat je Beschichtung beträgt insbesondere 2 bis 20 g/l Volumen des Wandflussfilters.

Insbesondere enthält Beschichtung Z Strontiumoxid oder Bariumoxid.

In weiteren Ausführungsformen der vorliegenden Erfindung enthalten eine oder beide der Beschichtungen Y und Z Additive wie Seltenerdverbindungen wie z.B. Lanthanoxid und/oder Binder, wie z.B. Aluminiumverbindungen. Diese Additive werden in Mengen verwendet, die in weiten Grenzen variieren können und die der Fachmann im konkreten Fall mit einfachen Mitteln bestimmen kann.

In Ausführungsformen der vorliegenden Erfindung sind die Beschichtungen Y und Z verschieden voneinander, wobei aber beide Lanthan-stabilisiertes Aluminiumoxid, sowie Palladium und Rhodium und eine Zirkoniumoxid, Ceroxid, Lanthanoxid, sowie Yttriumoxid und/oder Praeodymoxid umfassende Sauerstoffspeicherkomponente umfassen.

In Beschichtung Y ist dabei der Yttriumoxid-Gehalt insbesondere 5 bis 15 Gew.-%, bezogen auf das Gewicht der Sauerstoffspeicherkomponente. Das Gewichtsverhältnis von Lanthanoxid zu Yttriumoxid beträgt insbesondere 0.1 bis 1.

In Ausführungsformen der vorliegenden Erfindung ist der Gehalt von Yttriumoxid in der Sauerstoffspeicherkomponente der Beschichtung Z größer oder gleich dem Gehalt von Yttriumoxid in der Sauerstoffspeicher-komponente der Beschichtung Y, jeweils bezogen auf das Gewicht der jeweiligen Sauerstoffspeicherkomponente.

Insbesondere Beschichtung Z kann eine zusätzliche Sauerstoffspeicher-komponente umfassen, die Zirkoniumoxid, Ceroxid, Praseodymoxid und Lanthanoxid enthält.

Dabei ist der Praseodymoxid-Gehalt insbesondere 2 bis 10 Gew.-%, bezogen auf das Gewicht der Sauerstoffspeicherkomponente. Das Gewichtsverhältnis von Lanthanoxid zu Praseodymoxid beträgt insbesondere 0.1 bis 1.

In Ausführungsformen der vorliegenden Erfindung ist in Beschichtung Z der Zirkoniumoxid-Gehalt des Yttriumoxid-haltigen Sauerstoffspeicher-komponente größer als der Zirkoniumoxid-Gehalt des Praseodymoxidhaltigen Sauerstoffspeicherkomponente, jeweils bezogen auf die jeweilige Sauerstoffspeicherkomponente.

Die Beschichtungen Y und Z umfassen in Ausführungsformen jeweils Lanthan-stabilisiertes Aluminiumoxid in Mengen von 20 bis 70 Gew.-%, besonders bevorzugt 30 bis 60 Gew.-%, sowie Sauerstoffspeicher-komponente in Mengen von 30 bis 80 Gew.-%, besonders bevorzugt 40 bis 70 Gew.-%, jeweils bezogen auf das Gesamtgewicht der Beschichtung Y bzw. Z.

In Ausführungsformen der vorliegenden Erfindung beträgt in Beschichtung Y das Gewichtsverhältnis von Aluminiumoxid zur Sauerstoffspeicher-komponente mindestens 0,7.

In Ausführungsformen der vorliegenden Erfindung beträgt in Beschichtung Z das Gewichtsverhältnis von Aluminiumoxid zur Sauerstoffspeicher-komponente mindestens 0,3.

In Ausführungsformen der vorliegenden Erfindung erstreckt sich die Beschichtung Y ausgehend vom ersten Ende des Wandflussfilters über 51 bis 90 %, insbesondere über 57 bis 65 % der Länge L des Wandflussfilters. Die Beladung des Wandflussfilters mit Beschichtung Y beträgt bevorzugt 33 bis 125 g/l, bezogen auf das Volumen des Wandflussfilters.

In Ausführungsformen der vorliegenden Erfindung erstreckt sich die Beschichtung Z ausgehend vom zweiten Ende des Wandflussfilters über 60 bis 100 %, bevorzugt über 90 bis 100 % der Länge L des Wandflussfilters. Die Beladung des Wandflussfilters mit Beschichtung Z beträgt bevorzugt 33 bis 125 g/l, bezogen auf das Volumen des Wandflussfilters.

Die Gesamtwashcoatbeladung des erfindungsgemäßen Partikelfilters beträgt insbesondere 40 bis 150 g/l, bezogen auf das Volumen des Wandflussfilters. In Ausführungsformen der vorliegenden Erfindung beträgt die Summe der Längen von Beschichtung Y und Beschichtung Z 110 bis 180 % der Länge L. In Ausführungsformen der vorliegenden Erfindung enthält weder Beschichtung Y, noch Beschichtung Z einen Zeolithen oder ein Molsieb.

In einer Ausführungsform der vorliegenden Erfindung betrifft diese ein Partikelfilter, das ein Wandflussfilter der Länge L und zwei unterschiedliche Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. Oa, bilden und wobei die Kanäle E am zweiten Ende und die Kanäle A am ersten Ende verschlossen sind, wobei Beschichtung Y sich in den Kanälen E auf den Oberflächen O_{E} befindet und sich ausgehend vom ersten Ende des Wandflussfilters über 57 bis 65 % der Länge L erstreckt und Aluminiumoxid in einer Menge von 35 bis 60 Gew.-%, bezogen auf das Gesamtgewicht der Beschichtung Y, Palladium und Rhodium und eine Sauerstoffspeicherkomponente in einer Menge von 40 bis 50 Gew.-%, bezogen auf das Gesamtgewicht der Beschichtung Y enthält, wobei die Sauerstoffspeicherkomponente Zirkoniumoxid, Ceroxid, Lanthanoxid und Yttriumoxid oder Zirkoniumoxid, Ceroxid, Lanthanoxid und Praseodymoxid umfasst, und

Beschichtung Z sich in den porösen Wänden befindet und sich ausgehend vom zweiten Ende des Wandflussfilters über 60 bis 100 % der Länge L erstreckt und Aluminiumoxid in einer Menge von 25 bis 50 Gew.-%, bezogen auf das Gesamtgewicht der Beschichtung , Palladium und Rhodium und zwei Sauerstoffspeicherkomponenten in einer Gesamtmenge von 50 bis 80 Gew.-%, bezogen auf das Gesamtgewicht der Beschichtung Z enthält, wobei eine Sauerstoffspeicher-komponente Zirkoniumoxid, Ceroxid, Lanthanoxid und Yttriumoxid und die andere Zirkoniumoxid, Ceroxid, Lanthanoxid und Praseodymoxid enthält. Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit, haben beispielsweise eine Zelligkeit von 200 bis 400 Zellen pro Inch und üblicherweise eine Wandstärke zwischen 6 und 12 Mil, bzw. 0,1524 und 0,305 Millimeter Sie weisen in unbeschichtetem Zustand beispielsweise Porositäten von 50 bis 80, insbesondere 55 bis 75% auf. Ihre durchschnittliche Porengröße beträgt in unbeschichtetem Zustand beispielsweise 10 bis 25 Mikrometer. In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Herstellung des erfindungsgemäßen Partikelfilters kann nach dem Fachmann geläufigen Methoden erfolgen, so etwa dadurch, dass eine Beschichtungssuspension, die üblicherweise Washcoat genannt wird, mittels eines der üblichen Tauchbeschichtungsverfahren bzw. Pump- und Saug-Beschichtungsverfahren auf das Wandflussfilter appliziert wird. Thermische Nachbehandlung bzw. Kalzination schließen sich üblicherweise an.

Die Beschichtungen Y und Z werden in getrennten und aufeinanderfolgenden Beschichtungsschritten erhalten.

Dem Fachmann ist bekannt, dass die durchschnittliche Porengröße des Wandflussfilters und die mittlere Teilchengröße der katalytisch aktiven Materialien aufeinander abgestimmt werden müssen, um eine auf-Wand-Beschichtung oder eine in-Wand-Beschichtung zu erzielen. In Fall der in-Wand-Beschichtung muss die mittlere Teilchengröße der katalytisch aktiven Materialien klein genug sein, um in die Poren des Wandflussfilters einzudringen. Dagegen muss im Fall der auf-Wand-Beschichtung die mittlere Teilchengröße der katalytisch aktiven Materialien groß genug sein, um nicht in die Poren des Wandflussfilters einzudringen.

In Ausführungsformen der vorliegenden Erfindung werden die Beschichtungssuspensionen zur Herstellung der Beschichtungen Y bis zu einer Partikelgrößenverteilung von d₅₀ = 4 bis 8 mm und d₉₉ = 22 bis 16 mm gemahlen.

In Ausführungsformen der vorliegenden Erfindung werden die Beschichtungssuspensionen zur Herstellung der Beschichtungen Z bis zu einer Partikelgrößenverteilung von d₅₀ = 1 bis 2 mm und d₉₉ = 6 bis 7 mm gemahlen.

Das erfindungsgemäße Partikelfilter eignet sich hervorragend zur Entfernung von Partikeln, Kohlenmonoxid, Kohlenwasserstoffen und Stickoxiden aus dem Abgas von mit stöchiometrischem Luft/KraftstoffGemisch betriebenen Verbrennungsmotoren.

Die vorliegende Erfindung betrifft somit auch ein Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, das dadurch gekennzeichnet ist, dass das Abgas über ein erfindungsgemäßes Partikelfilter geleitet wird.

Dabei wird das Abgas so über ein erfindungsgemäßes Partikelfilter geleitet, dass es durch die Kanäle E in das Partikelfilter eintritt und es durch Kanäle A wieder verlässt.

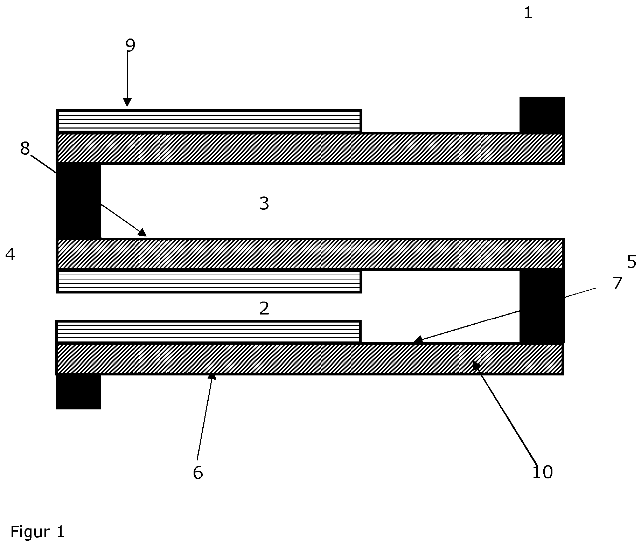

Figur 1 zeigt ein erfindungsgemäßes Partikelfilter, das ein Wandflussfilter der Länge L (1) mit Kanälen E (2) und Kanälen A (3) umfasst, die sich parallel zwischen einem ersten Ende (4) und einem zweiten Ende (5) des Wandflussfilters erstrecken und die durch poröse Wände (6) getrennt sind, die Oberflächen O_{E} (7) bzw. Oa, (8) bilden und wobei die Kanäle E (2) am zweiten Ende (5) und die Kanäle A (3) am ersten Ende (4) verschlossen sind. Beschichtung Y (9) befindet sich in den Kanälen E (2) auf den Oberflächen O_{E} (7) und Beschichtung Z (10) in den porösen Wänden (6). Die Erfindung wird in den nachstehenden Beispielen näher erläutert.

### Vergleichsbeispiel 1

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicher-komponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 100 g/l, die Gesamtedelmetallbeladung 0,44 g/l mit einem Verhältnis von Palladium zu Rhodium von 8 : 3. Der so erhaltene beschichtete Filter wurde getrocknet und anschließend kalziniert. Er wird nachstehend als VGPF1 bezeichnet.

### Beispiel 1 (nicht gemäß der vorliegenden Erfindung):

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicher-komponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Beladung dieses Filters betrug 100 g/l, die Edelmetallbeladung 0,34 g/l mit einem Verhältnis von Palladium zu Rhodium von 16 : 3. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 24 Gew-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 38 % der Filterlänge. Die Beladung des Eingangskanals betrug 54 g/l, die Edelmetallbeladung 0,27 g/l mit einem Verhältnis von Palladium zu Rhodium von 2,6 : 5. Der so erhaltene beschichtete Filter wurde getrocknet und anschließend kalziniert. Die Gesamtbeladung dieses Filters betrug somit 121 g/l, die Gesamtedelmetallbeladung 0,44 g/l mit einem Verhältnis von Palladium zu Rhodium von 8 : 3. Er wird nachstehend als GPF1 bezeichnet.

### Katalytische Charakterisierung

Die Partikelfilter VGPF1 und GPF1 wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 9,5 Stunden (siehe Motortechnische Zeitschrift, 1994, 55, 214-218).

Anschließend wurden die katalytisch aktiven Partikelfilter im gealterten Zustand an einem Motorprüfstand im sogenannten "Light-off Test" und im "lambda Sweeptest" getestet. Bei dem Light-off Test wird das Anspringverhalten bei stöchiometrischer Abgaszusammensetzung mit konstanter mittlerer Luftzahl λ bestimmt (λ =0,999 mit ±3,4% Amplitude).

Die nachfolgende Tabelle 1 enthält die Temperaturen T₅₀, bei denen jeweils 50% der betrachteten Komponenten umgesetzt werden.

**Tabelle 1**

| | T₅₀ HC stöch | T₅₀ CO stöch | T₅₀ NOx stöch |
|---|---|---|---|
| VGPF1 | 418 | 430 | 432 |
| GPF1 | 377 | 384 | 387 |

Das dynamische Umsatzverhalten der Partikelfilter im lambda Sweeptest wurde in einem Bereich von λ = 0,99 - 1,01 bei einer konstanten Temperatur von 510°C bestimmt. Die Amplitude von λ betrug dabei ±6,8%. Tabelle 2 enthält den Umsatz am Schnittpunkt der CO- und der NOx-Umsatzkurven, sowie den zugehörigen HC-Umsatz der gealterten Partikelfilter.

**Tabelle 2**

| | CO/NOx Umsatz am Kreuzungspunkt | HC Umsatz am λ des CO/NOx Kreuzungspunktes |
|---|---|---|
| VGPF1 | 79% | 94% |
| GPF1 | 83% | 95% |

Der erfindungsgemäße Partikelfilter GPF1 zeigt gegenüber VGPF1 im gealterten Zustand eine deutliche Verbesserung beim Anspringverhalten und beim dynamischen CO/NOx-Umsatz.

### Vergleichsbeispiel 2:

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 75 g/l, die Edelmetallbeladung 0,71 g/l mit einem Verhältnis von Palladium zu Rhodium von 3 : 1. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriummoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 25 % der Filterlänge. Die Beladung des Eingangskanals betrug 50 g/l, die Edelmetallbeladung 2,12 g/l mit einem Verhältnis von Palladium zu Rhodium von 5 : 1. Der so erhaltene beschichtete Filter wurde getrocknet und anschließend kalziniert.

### c) Beschichtung der Ausgangskanäle

Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriummoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter b) erhaltenen Wandflussfiltersubstrats eingesetzt, wobei auf die Filterwände des Substrats beschichtet wurde und zwar in den Ausgangskanälen auf eine Länge von 25 % der Filterlänge. Die Beladung des Ausgangskanals betrug 50 g/l, die Edelmetallbeladung 2,12 g/l mit einem Verhältnis von Palladium zu Rhodium von 5 : 1. Der so erhaltene beschichtete Filter wurde getrocknet und anschließend kalziniert. Die Gesamtbeladung dieses Filters betrug somit 100 g/l, die Gesamtedelmetallbeladung 1,77 g/l mit einem Verhältnis von Palladium zu Rhodium von 4 : 1. Er wird nachstehend als VGPF2 bezeichnet.

### Beispiel 2:

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Beladung dieses Filters betrug 50 g/l, die Edelmetallbeladung 0,71 g/l mit einem Verhältnis von Palladium zu Rhodium von 3 : 1. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 24 Gew-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 60 % der Filterlänge. Die Beladung des Eingangskanals betrug 83,3 g/l, die Edelmetallbeladung 1,77 g/l mit einem Verhältnis von Palladium zu Rhodium von 42 : 8. Der so erhaltene beschichtete Filter wurde getrocknet und anschließend kalziniert. Die Gesamtbeladung dieses Filters betrug somit 100 g/l, die Gesamtedelmetallbeladung 1,77 g/l mit einem Verhältnis von Palladium zu Rhodium von 4 : 1. Er wird nachstehend als GPF2 bezeichnet.

### Katalytische Charakterisierung

Die Partikelfilter VGPF2 und GPF2 wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 58 Stunden (siehe Motortechnische Zeitschrift, 1994, 55, 214-218).

Anschließend wurden die katalytisch aktiven Partikelfilter im gealterten Zustand an einem Motorprüfstand im sogenannten "Light-off Test" und im "lambda Sweeptest" getestet. Bei dem Light-off Test wird das Anspringverhalten bei stöchiometrischer Abgaszusammensetzung mit konstanter mittlerer Luftzahl λ bestimmt (λ =0,999 mit ±3,4% Amplitude).

Die nachfolgende Tabelle 1 enthält die Temperaturen T₅₀, bei denen jeweils 50% der betrachteten Komponenten umgesetzt werden.

**Tabelle 1**

| | T ₅₀ HC stöch | T₅₀ CO stöch | T₅₀ NOx stöch |
|---|---|---|---|
| VGPF2 | 356 | 360 | 365 |
| GPF2 | 351 | 356 | 359 |

Das dynamische Umsatzverhalten der Partikelfilter im lambda Sweeptest wurde in einem Bereich von λ = 0,99 - 1,01 bei einer konstanten Temperatur von 510°C bestimmt. Die Amplitude von λ betrug dabei 66,8%. Tabelle 2 enthält den Umsatz am Schnittpunkt der CO- und der NOx-Umsatzkurven, sowie den zugehörigen HC-Umsatz der gealterten Partikelfilter.

**Tabelle 2**

| | CO/NOx Umsatz am Kreuzungspunkt | HC Umsatz am λ des CO/NOx Kreuzungspunktes |
|---|---|---|
| VGPF2 | 79% | 96% |
| GPF2 | 86% | 97% |

Der erfindungsgemäße Partikelfilter GPF2 zeigt gegenüber VGPF2 im gealterten Zustand eine deutliche Verbesserung beim Anspringverhalten und beim dynamischen CO/NOx-Umsatz.

### Vergleichsbeispiel 3:

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 100 g/l, die Edelmetallbeladung 2,60 g/l mit einem Verhältnis von Palladium zu Rhodium von 60 : 13,75. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 40 Gew.-% Ceroxid, Zirkonoxid, Lanthanoxid und Praseodymoxid umfasste, in Wasser suspendiert. Das Gewichtsverhältnis von Aluminiumoxid und Sauerstoffspeicherkomponente betrug 50:50. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 25 % der Filterlänge. Die Beladung des Eingangskanals betrug 58 g/l, die Edelmetallbeladung 2,30 g/l mit einem Verhältnis von Palladium zu Rhodium von 10 : 3. Der so erhaltene beschichtete Filter wurde getrocknet und anschließend kalziniert.

### c) Beschichtung der Ausgangskanäle

Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter b) erhaltenen Wandflussfiltersubstrats eingesetzt, wobei auf die Filterwände des Substrats beschichtet wurde und zwar in den Ausgangskanälen auf eine Länge von 25 % der Filterlänge. Die Beladung des Auslasskanals betrug 59 g/l, die Edelmetallbeladung 1,06 g/l mit einem Verhältnis von Palladium zu Rhodium von 1 : 2. Der so erhaltene beschichtete Filter wurde getrocknet und anschließend kalziniert. Die Gesamtbeladung dieses Filters betrug somit 130 g/l, die Gesamtedelmetallbeladung 3,44 g/l mit einem Verhältnis von Palladium zu Rhodium von 10 : 3. Er wird nachstehend als VGPF3 bezeichnet.

### Beispiel 3:

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Beladung dieses Filters betrug 100 g/l, die Edelmetallbeladung 2,07 g/l mit einem Verhältnis von Palladium zu Rhodium von 45 : 13,5. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 24 Gew-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 60 % der Filterlänge. Die Beladung des Eingangskanals betrug 80 g/l, die Edelmetallbeladung 2,30 g/l mit einem Verhältnis von Palladium zu Rhodium von 10 : 3. Der so erhaltene beschichtete Filter wurde getrocknet und anschließend kalziniert. Die Gesamtbeladung dieses Filters betrug somit 148 g/l, die Gesamtedelmetallbeladung 3,44 g/l mit einem Verhältnis von Palladium zu Rhodium von 10 : 3. Er wird nachstehend als GPF3 bezeichnet.

### Katalytische Charakterisierung

Die Partikelfilter VGPF3 und GPF3 wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 76 Stunden (siehe Motortechnische Zeitschrift, 1994, 55, 214-218).

Anschließend wurden die katalytisch aktiven Partikelfilter im gealterten Zustand an einem Motorprüfstand im sogenannten "Light-off Test" und im "lambda Sweeptest" getestet. Bei dem Light-off Test wird das Anspringverhalten bei stöchiometrischer Abgaszusammensetzung mit konstanter mittlerer Luftzahl λ bestimmt (λ =0,999 mit ±3,4% Amplitude).

Die nachfolgende Tabelle 1 enthält die Temperaturen T₅₀, bei denen jeweils 50% der betrachteten Komponenten umgesetzt werden.

**Tabelle 1**

| | T₅₀ HC stöch | T₅₀ CO stöch | T₅₀ NOx stöch |
|---|---|---|---|
| VGPF3 | 368 | 374 | 371 |
| G PF3 | 341 | 345 | 340 |

Das dynamische Umsatzverhalten der Partikelfilter im lambda Sweeptest wurde in einem Bereich von λ = 0,99 - 1,01 bei einer konstanten Temperatur von 510°C bestimmt. Die Amplitude von λ betrug dabei ±6,8%. Tabelle 2 enthält den Umsatz am Schnittpunkt der CO- und der NOx-Umsatzkurven, sowie den zugehörigen HC-Umsatz der gealterten Partikelfilter.

**Tabelle 2**

| | CO/NOx Umsatz am Kreuzungspunkt | HC Umsatz am λ des CO/NOx Kreuzungspunktes |
|---|---|---|
| VGPF3 | 83% | 97% |
| GPF3 | 90% | 98% |

Der erfindungsgemäße Partikelfilter GPF3 zeigt gegenüber VGPF3 im gealterten Zustand eine deutliche Verbesserung beim Anspringverhalten und beim dynamischen CO/NOx-Umsatz.

## Patentansprüche

1. Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und zwei unterschiedliche Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, **dadurch gekennzeichnet, dass** sich Beschichtung Y in den Kanälen E auf den Oberflächen O_{E} befindet und sich ausgehend vom ersten Ende des Wandflussfilters auf einer Länge von 51 bis 90 % der Länge L erstreckt und sich Beschichtung Z in den porösen Wänden befindet und sich ausgehend vom zweiten Ende des Wandflussfilters auf einer Länge von 60 bis 100 % der Länge L erstreckt, und dass die Beschichtungen Y und Z jeweils die Edelmetalle Palladium und Rhodium enthalten, die auf einem oder mehreren Trägermaterialien fixiert sind, sowie ein oder mehrere Sauerstoffspeicherkomponenten enthalten, mit der Maßgabe, dass wenn sich die Beschichtung Z über die gesamte Länge L erstreckt und sich die Beschichtung Y auf einer Länge von 51 bis 70% der Länge L erstreckt, der Partikelfilter über Y und Z hinaus keine dritte, katalytisch aktive Beschichtung umfasst, die sich in den Kanälen A auf den Oberflächen O_{A} befindet und sich ausgehend vom zweiten Ende des Wandflussfilters über 20 bis 70% der Länge L erstreckt, sofern die Summe der Längen der Beschichtung Y und einer solchen dritten Beschichtung kleiner als die Filtergesamtlänge wäre.

2. Partikelfilter gemäß Anspruch 1, **dadurch gekennzeichnet, dass** sich die Beschichtung Y ausgehend vom ersten Ende des Wandflussfilters auf 51 bis 80 % der Länge L des Wandflussfilters erstreckt.

3. Partikelfilter gemäß Anspruch 2, **dadurch gekennzeichnet, dass** sich die Beschichtung Y ausgehend vom ersten Ende des Wandflussfilters auf 57 bis 65 % der Länge L des Wandflussfilters erstreckt.

4. Partikelfilter gemäß einem oder mehreren der Ansprüche 1-3, **dadurch gekennzeichnet, dass** die Trägermaterialien für die Edelmetalle Metalloxide mit einer BET-Oberfläche von 30 bis 250 m2/g (bestimmt nach DIN 66132) sind.

5. Partikelfilter gemäß einem oder mehreren der Ansprüche 1-3, **dadurch gekennzeichnet, dass** die Trägermaterialien für die Edelmetalle ausgewählt sind aus der Reihe bestehend aus Aluminiumoxid, dotiertes Aluminiumoxid, Siliziumoxid, Titandioxid und Mischoxiden aus einem oder mehreren davon.

6. Partikelfilter gemäß einem oder mehreren der Ansprüche 1 bis 5, **dadurch gekennzeichnet, dass** die Beschichtungen Y und Z als Sauerstoffspeicher-komponente ein Cer/Zirkonium/Seltenerdmetall-Mischoxide enthalten.

7. Partikelfilter gemäß Anspruch 6, **dadurch gekennzeichnet, dass** die Cer/Zirkonium/Seltenerdmetall-Mischoxide als Seltenerdmetalloxid Lanthanoxid, Yttriumoxid, Praseodymoxid, Neodymoxid und/oder Samariumoxid enthalten

8. Partikelfilter gemäß Anspruch 6 und/oder 7, **dadurch gekennzeichnet, dass** die Cer/Zirkonium/Seltenerdmetall-Mischoxide als Seltenerdmetalloxid Lanthanoxid und Yttriumoxid, Yttriumoxid und Praseodymoxid oder Lanthanoxid und Praseodymoxid enthalten.

9. Partikelfilter gemäß einem oder mehreren der Ansprüche 1-8, **dadurch gekennzeichnet, dass** die Beschichtungen Y und Z beide Lanthan-stabilisiertes Aluminiumoxid, Palladium und Rhodium und eine Zirkoniumoxid, Ceroxid, Yttriumoxid und Lanthanoxid und/oder eine Zirkoniumoxid, Ceroxid, Praseodymoxid und Lanthanoxid umfassende Sauerstoffspeicherkomponente umfassen.

10. Partikelfilter gemäß einem oder mehreren der Ansprüche 1 bis 9, das ein
Wandflussfilter der Länge L und zwei unterschiedliche Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, **dadurch gekennzeichnet, dass**
Beschichtung Y sich in den Kanälen E auf den Oberflächen O_{E} befindet und sich ausgehend vom ersten Ende des Wandflussfilters über 57 bis 65 % der Länge L erstreckt und Aluminiumoxid in einer Menge von 35 bis 60 Gew.-%, bezogen auf das Gesamtgewicht der Beschichtung Y, Palladium und Rhodium und eine Sauerstoffspeicherkomponente in einer Menge von 40 bis 50 Gew.-%, bezogen auf das Gesamtgewicht der Beschichtung Y enthält, wobei die Sauerstoffspeicherkomponente Zirkoniumoxid, Ceroxid, Lanthanoxid und Yttriumoxid oder Zirkoniumoxid, Ceroxid, Lanthanoxid und Praseodymoxid umfasst, und
Beschichtung Z sich in den porösen Wänden befindet und sich ausgehend vom zweiten Ende des Wandflussfilters über 60 bis 100 % der Länge L erstreckt und Aluminiumoxid in einer Menge von 25 bis 50 Gew.-%, bezogen auf das Gesamtgewicht der Beschichtung , Palladium und Rhodium und zwei Sauerstoffspeicherkomponenten in einer Gesamtmenge von 50 bis 80 Gew.-%, bezogen auf das Gesamtgewicht der Beschichtung Z enthält, wobei eine Sauerstoffspeicherkomponente Zirkoniumoxid, Ceroxid, Lanthanoxid und Yttriumoxid und die andere Zirkoniumoxid, Ceroxid, Lanthanoxid und Praseodymoxid enthält.

11. Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, **dadurch gekennzeichnet, dass** das Abgas über ein Partikelfilter gemäß einem oder mehreren der Ansprüche 1 bis 10 geleitet wird.

## Claims

1. A particle filter for removing particulates, carbon monoxide, hydrocarbons and nitrogen oxides from the exhaust gas of internal combustion engines operating with stoichiometric air/fuel mixture, comprising a wall flow filter of length L and two different coatings Y and Z, wherein the wall flow filter comprises channels E and A which extend in parallel between a first and a second end of the wall flow filter and which are separated by porous walls forming surfaces O_{E} and O_{A}, respectively, and wherein the channels E at the second end and the channels A at the first end are closed, **characterized in that** coating Y is located in the channels E on the surfaces O_{E} and extends from the first end of the wall flow filter over a length of 51 to 90% of the length L and coating Z is located in the porous walls and extends from the second end of the wall flow filter over a length of 60 to 100% of the length L and **in that** the coatings Y and Z each contain the precious metals palladium and rhodium fixed to one or more carrier materials and contain one or more oxygen storage components; with the proviso that, if coating Z extends over the entire length L and coating Y extends over a length of 51 to 70% of the length L, the particulate filter does not comprise, beyond Y and Z, a third catalytically active coating which is present in the channels A on the surfaces OA and extends from the second end of the wall-flow filter over 20 to 70% of the length L, provided that the sum of the lengths of coating Y and such a third coating would be less than the total filter length.

2. The particle filter according to claim 1, **characterized in that** the coating Y extends from the first end of the wall flow filter to 51 to 80% of the length L of the wall flow filter.

3. The particle filter according to claim 2, **characterized in that** the coating Y extends from the first end of the wall flow filter to 57 to 65% of the length L of the wall flow filter.

4. The particle filter according to any of claims 1-3, **characterized in that** the carrier materials for the precious metals are metal oxides with a BET surface area of 30 to 250 m2/g (determined in accordance with DIN 66132).

5. The particle filter according to any of claims 1-3, **characterized in that** the carrier materials for the precious metals are selected from the series consisting of alumina, doped alumina, silica, titania, and mixed oxides of one or more thereof.

6. The particle filter according to any of claims 1 to 5, **characterized in that** the coatings Y and Z contain a cerium/zirconium/rare earth mixed oxide as the oxygen storage component.

7. The particle filter according to claim 6, **characterized in that** the cerium/zirconium/rare earth mixed oxides contain as rare earth oxide lanthanum oxide, yttrium oxide, praseodymium oxide, neodymium oxide and/or samarium oxide.

8. The particle filter according to claim 6 and/or 7, **characterized in that** the cerium/zirconium/rare earth mixed oxides contain as rare earth oxide lanthanum oxide and yttrium oxide, yttrium oxide and praseodymium oxide, or lanthanum oxide and praseodymium oxide.

9. The particle filter according to any of claims 1-8, **characterized in that** the coatings Y and Z both comprise lanthanum-stabilized alumina, palladium, and rhodium and a zirconia, ceria, yttria, and lanthanum oxide and/or an oxygen storage component comprising zirconia, ceria, praseodymium oxide, and lanthanum oxide.

10. The particle filter according to any of claims 1 to 9, comprising a wall flow filter of length L and two different coatings Y and Z, wherein the wall flow filter comprises channels E and A which extend in parallel between a first and a second end of the wall flow filter and which are separated by porous walls forming surfaces O_{E} and O_{A}, respectively, and wherein the channels E at the second end and the channels A at the first end are closed, **characterized in that**
coating Y is located in the channels E on the surfaces O_{E} and extends from the first end of the wall flow filter over 57 to 65% of the length L and comprises alumina in an amount of 35 to 60% by weight, based on the total weight of the coating Y, palladium and
rhodium and an oxygen storage component in an amount of 40 to 50% by weight based on the total weight of the coating Y, wherein the oxygen storage component comprises zirconium oxide, cerium oxide, lanthanum oxide and yttrium oxide or zirconium oxide, cerium oxide, lanthanum oxide and praseodymium oxide and
coating Z is located in the porous walls and extends from the second end of the wall flow filter over 60 to 100% of the length L and contains alumina in an amount of 25 to 50% by weight based on the total weight of the coating, palladium and
rhodium and two oxygen storage components in a total amount of 50 to 80% by weight based on the total weight of the coating Z, wherein one oxygen storage component contains zirconium oxide, cerium oxide, lanthanum oxide and yttrium oxide and the other contains zirconium oxide, cerium oxide, lanthanum oxide and praseodymium oxide.

11. A method for removing particles, carbon monoxide, hydrocarbons and nitrogen oxides from the exhaust gas of internal combustion engines operated with a stoichiometric air/fuel mixture, **characterized in that** the exhaust gas is passed over a particle filter according to any of claims 1 to 10.

## Revendications

1. Filtre à particules permettant d'éliminer des particules, du monoxyde de carbone, des hydrocarbures et des oxydes d'azote des gaz d'échappement de moteurs à combustion interne fonctionnant avec un mélange air/carburant stœchiométrique, lequel filtre à particules comprend un filtre à écoulement sur paroi de longueur L et deux revêtements Y et Z différents, dans lequel le filtre à écoulement sur paroi comprend des canaux E et A qui s'étendent parallèlement entre une première et une seconde extrémité du filtre à écoulement sur paroi et qui sont séparés par des parois poreuses formant des surfaces O_{E} ou O_{A}, et dans lequel les canaux E sont fermés au niveau de la seconde extrémité et les canaux A sont fermés au niveau de la première extrémité, **caractérisé en ce que** le revêtement Y se trouve dans les canaux E sur les surfaces O_{E} et s'étend, à partir de la première extrémité du filtre à écoulement sur paroi, sur une longueur de 51 à 90 % de la longueur L, et le revêtement Z se trouve dans les parois poreuses et s'étend, à partir de la seconde extrémité du filtre à écoulement sur paroi, sur une longueur de 60 à 100 % de la longueur L, **et en ce que** les revêtements Y et Z contiennent respectivement les métaux précieux palladium et rhodium, lesquels sont fixés sur un ou plusieurs matériaux de support, et contiennent un ou plusieurs composants de stockage d'oxygène ; étant entendu que, si le revêtement Z s'étend sur toute la longueur L et que le revêtement Y s'étend sur une longueur correspondant à 51 à 70 % de la longueur L, le filtre à particules ne comprend, au-delà de Y et de Z, aucun troisième revêtement catalytiquement actif disposé dans les canaux A sur les surfaces OA et s'étendant à partir de la deuxième extrémité du filtre à écoulement mural sur 20 à 70 % de la longueur L, pour autant que la somme des longueurs du revêtement Y et d'un tel troisième revêtement soit inférieure à la longueur totale du filtre.

2. Filtre à particules selon la revendication 1, **caractérisé en ce que** le revêtement Y s'étend, à partir de la première extrémité du filtre à écoulement sur paroi, sur 51 à 80 % de la longueur L du filtre à écoulement sur paroi.

3. Filtre à particules selon la revendication 2, **caractérisé en ce que** le revêtement Y s'étend, à partir de la première extrémité du filtre à écoulement sur paroi, sur 57 à 65 % de la longueur L du filtre à écoulement sur paroi.

4. Filtre à particules selon une ou plusieurs des revendications 1 à 3, **caractérisé en ce que** les matériaux de support pour les métaux précieux sont des oxydes métalliques comportant une surface BET de 30 à 250 m2/g (déterminée selon la norme DIN 66132).

5. Filtre à particules selon une ou plusieurs des revendications 1 à 3, **caractérisé en ce que** les matériaux de support pour les métaux précieux sont choisis parmi le groupe constitué par oxyde d'aluminium, oxyde d'aluminium dopé, oxyde de silicium, dioxyde de titane et des oxydes mixtes constitués d'un ou de plusieurs de ceux-ci.

6. Filtre à particules selon une ou plusieurs des revendications 1 à 5, **caractérisé en ce que** les revêtements Y et Z contiennent, en tant que composant de stockage d'oxygène, un oxyde mixte de cérium/zirconium/métal de terres rares.

7. Filtre à particules selon la revendication 6, **caractérisé en ce que** les oxydes mixtes de cérium/zirconium/métal de terres rares contiennent, en tant qu'oxyde de métal de terres rares, de l'oxyde de lanthane, de l'oxyde d'yttrium, de l'oxyde de praséodyme, de l'oxyde de néodyme et/ou de l'oxyde de samarium

8. Filtre à particules selon la revendication 6 et/ou 7, **caractérisé en ce que** les oxydes mixtes de cérium/zirconium/métal de terres rares contiennent, en tant qu'oxyde de métal de terres rares, de l'oxyde de lanthane et de l'oxyde d'yttrium, de l'oxyde d'yttrium et de l'oxyde de praséodyme ou de l'oxyde de lanthane et de l'oxyde de praséodyme.

9. Filtre à particules selon une ou plusieurs des revendications 1 à 8, **caractérisé en ce que** les revêtements Y et Z comprennent tous deux des composants de stockage d'oxygène comprenant de l'oxyde d'aluminium stabilisé au lanthane, du palladium et du rhodium et un oxyde de zirconium, oxyde de cérium, oxyde d'yttrium et oxyde de lanthane et/ou un oxyde de zirconium, oxyde de cérium, oxyde de praséodyme et oxyde de lanthane.

10. Filtre à particules selon une ou plusieurs des revendications 1 à 9 qui comprend un filtre à écoulement sur paroi de longueur L et deux revêtements Y et Z différents, dans lequel le filtre à écoulement sur paroi comprend des canaux E et A qui s'étendent parallèlement entre une première et une seconde extrémité du filtre à écoulement sur paroi et qui sont séparés par des parois poreuses formant des surfaces D_{E} ou D_{A}, et dans lequel les canaux E sont fermés au niveau de la seconde extrémité et les canaux A sont fermés au niveau de la première extrémité, **caractérisé en ce que**
le revêtement Y se trouve dans les canaux E sur les surfaces O_{E} et s'étend, à partir de la première extrémité du filtre à écoulement sur paroi, sur 57 à 65 % de la longueur L et contient de l'oxyde d'aluminium en une quantité de 35 à 60 % en poids par rapport au poids total du revêtement Y, du palladium et du rhodium et un composant de stockage d'oxygène en une quantité de 40 à 50 % en poids par rapport au poids total du revêtement Y, dans lequel le composant de stockage d'oxygène comprend de l'oxyde de zirconium, de l'oxyde de cérium, de l'oxyde de lanthane et de l'oxyde d'yttrium ou de l'oxyde de zirconium, de l'oxyde de cérium, de l'oxyde de lanthane et de l'oxyde de praséodyme, et
le revêtement Z se trouve dans les parois poreuses et s'étend, à partir de la seconde extrémité du filtre à écoulement sur paroi, sur 60 à 100 % de la longueur L et contient de l'oxyde d'aluminium en une quantité de 25 à 50 % en poids par rapport au poids total du revêtement, du palladium et du rhodium et deux composants de stockage d'oxygène en une quantité totale de 50 à 80 % en poids par rapport au poids total du revêtement Z, dans lequel un composant de stockage d'oxygène contient de l'oxyde de zirconium, de l'oxyde de cérium, de l'oxyde de lanthane et de l'oxyde d'yttrium et l'autre composant de stockage d'oxygène contient de l'oxyde de zirconium, de l'oxyde de cérium, de l'oxyde de lanthane et de l'oxyde de praséodyme.

11. Procédé permettant d'éliminer des particules, du monoxyde de carbone, des hydrocarbures et des oxydes d'azote des gaz d'échappement de moteurs à combustion interne fonctionnant avec un mélange air/carburant stœchiométrique, **caractérisé en ce que** les gaz d'échappement sont guidés à travers un filtre à particules selon une ou plusieurs des revendications 1 à 10.
